# EUROPEAN PATENT SPECIFICATION

(11) **EP 3 781 383 B1**
(45) Date of publication and mention of the grant of the patent: **12.07.2023**
(21) Application number: 19719229.7
(22) Date of filing: 17.04.2019
(51) Int. Cl.: B29C 63/00, B29C 63/48, B29C 63/02, B29C 65/08, B29C 65/48, B29C 65/52, B29C 65/78, B29C 65/00, B32B 37/00, B32B 37/06

(54) **METHOD AND INSTALLATION FOR JOINING A COVER LAYER TO AN OBJECT**
VERFAHREN UND ANLAGE ZUM VERBINDEN EINER DECKSCHICHT MIT EINEM OBJEKT
PROCÉDÉ ET INSTALLATION POUR JOINDRE UNE COUCHE DE COUVERTURE À UN OBJET

(30) Priority: 17.04.2018 CH 4972018
(43) Date of publication of application: 24.02.2021
(73) Proprietor: Woodwelding AG, 6362 Stansstad (CH)
(72) Inventor: LEHMANN, Mario, 2353 Les Pommerats (CH); TORRIANI, Laurent, 2516 Lamboing (CH); POSCHNER, Patricia, 3800 Interlaken (CH)
(74) Representative: Frei Patent Attorneys
(86) International application number: PCT/EP2019/059958
(87) International publication number: WO 2019/202012

(56) References cited:
- FR-A1- 2 584 336
- JP-A- H02 227 238
- US-A- 3 841 947
- US-B2- 7 896 994

## Description

### FIELD OF THE INVENTION

The invention concerns a method and an installation for joining a cover layer to an object, for example for joining an edge strip to a solid board or hollow core board or for joining a decoration layer to a board.

### BACKGROUND OF THE INVENTION

According to the prior art, cover layers, such as edge strips or decoration layers, are mostly attached to boards by lamination, be it using an adhesive that hardens during lamination or be it in a hot lamination process using a material having thermoplastic properties. Lamination includes applying a pressing force between the cover layer and the object, often by pressing rollers.

An alternative continuous process for joining an edge strip to boards is e.g. described in the publication WO 01/89809. According to the disclosure of the named publication, the boards are made e.g. of wood or chipboard and the edge strip is made of a thermoplastic material. The boards are conveyed behind each other through an apparatus and the edge strip is fed into the apparatus from a feed roll. During conveyance, the edge strip is pressed against the edge of the board and ultrasonic vibration is applied to the edge strip through a vibrating sonotrode acting from the strip side facing away from the board. The vibration causes friction between the strip and the board and therewith heat, which causes the strip material to be liquefied, and, due to the pressure, this liquefied material is pressed into the board material, where, on re-solidification it constitutes together with the board material a sort of a composite material and therewith a positive fit connection between the edge strip and the board.

According to the disclosure of WO 01/89809, use of ultrasonic vibration in the joining process has the advantage that the liquefied material has a very low viscosity due to the high shearing rates produced by the vibration. This low viscosity enables the liquefied material to penetrate into and to be dislocated in very fine e.g. porous or fibrous structures without the need of high forces and without high mechanical loading of these structures. This effect is further enhanced through the fact that the heating by vibration occurs in particular where the material to be liquefied is in contact with the porous or fibrous structure, such that the molten material will not have a cooler skin of a higher viscosity where in contact with the porous or fibrous structure even if the latter has a lower temperature.

A further continuous process for joining an edge strip to flat objects is disclosed in the publication EP2977186, wherein the flat objects are fiber reinforced composite boards comprising a thermoplastic or thermoset polymer. The edge strip consists of a thermoplastic polymer. In the continuous process for joining the edge strip to the edge of the board, the edge strip is pressed against the edge of the board and the thermoplastic polymer of the edge strip is partly liquefied using ultrasonic vibration applied to the edge strip for welding or adhesively joining the edge strip to the edge of the board.

Both named publications WO 01/89809 and EP2977186 propose for the continuous joining process stationary sonotrodes acting on the edge strip. The publication EP2977186 also proposes a rotating sonotrode, i.e. most probably a roll-shaped sonotrode arranged with a rotating axis parallel to the edge strip width and an axial length which corresponds about with the edge strip width. Similar rolling sonotrodes are widely used in continuous ultrasonic welding processes.

However, it has been observed that when rolling sonotrodes are used, for a satisfactory bond it is usually not sufficient to use a single sonotrode, but a rather large number of sonotrodes arranged in a sequence one after the other is necessary. Also, the adjustment of operation parameters is observed to be delicate. Further, using a series of stationary or rolling sonotrodes, may result in undesired markings on the outer surface of the edge strip, or in undesired effects due to cooling during conveyance between successive sonotrodes, in particular between rolling sonotrodes, which cannot be arranged immediately behind each other.

FR 2 584 336 discloses a process of fastening two thin films of wood to each other by an adhesive layer that cures by heat, the process comprising coupling ultrasonic energy by a rounded sonotrode into the assembly of the layers with the adhesive between them. US 3,841,947 discloses a method for continuous ultrasonic welding of plastic sheets for manufacturing balloons. The welding process is made by rounded sonotrodes.

### SUMMARY OF THE INVENTION

The object of the present invention is to create a method and an installation for joining a cover layer to an object in a continuous process, which method and installation are to improve corresponding methods and installations of the state of the art in terms of at least one of allowing higher conveying speeds, installation complexity, and of product quality. The method and the installation are to be suitable in particular for joining an edge strip to edges of board-shaped objects but may also be applicable for other processes in which a cover layer is joined to the surface of an object.

This object is achieved by the method and the installation as defined in the appended claims.

According to an aspect of the invention, a cover layer is joined to an object by means of a pressing force and mechanical vibration. The cover layer has a cover layer contact surface, and the object has an object contact surface, and the cover layer contact surface and the object contact surface are placed to face each other. A least one of the cover layer and of the object (i.e., the cover layer or the object or both) comprises a joining material. During the process, the cover layer contact surface is brought into contact with the object contact surface, and a sonotrode is used to press the cover layer against the object and to apply mechanical vibration to an outer surface of the cover layer for a time sufficient for activating the joining material.

The method comprises conveying the cover layer and object relative to the sonotrode in a continuous manner in a conveying direction throughout the steps of arranging, of bringing into contact, of pressing and of applying vibration. In many embodiments, the sonotrode in this is stationary, and the object and the cover layer are conveyed relative to a mounting structure (installation framework, working table or similar). However, it is not excluded that for special embodiments, conveying may imply moving the sonotrode with the object and the cover layer being stationary, for example in a step-by-step process.

The step of conveying causes a sliding movement, along the conveying direction, of the cover layer relative to a coupling-out face of the sonotrode. At least a portion of the coupling-out face is not parallel to the object contact surface so that a distance between the sonotrode and the object contact surface continuously decreases along the coupling-out face portion as function of a position along the conveying direction (meaning along an axis (x-axis) extending parallel to the conveying direction and pointing into the conveying direction).

Especially, the object is solid and rigid. It may comprise a material not liquefiable by the mechanical vibration but have structures capable of being interpenetrated by the joining material whereby after solidification/re-solidification of the joining material a positive fit connection with the solid not liquefiable material of the object results, as explained in more detail hereinafter.

The method may especially be a method of applying an edge band (as the cover layer) to at least one solid board (being the object).

The coupling-out face may for example be essentially plane, with the possible exception of entry portion that may for example be rounded convexly, and with the possible exception of an exit portion that may be rounded convexly or that may be plane but with a different angle. When the coupling-out face is essentially plane, a - for example relatively small - angle between the coupling-out face and the object contact face may be defined. The angle defines the path by which the cover layer is pressed into the object per conveying distance. However, the coupling-out face need not be plane but may for example be curved.

In many embodiments, the coupling-out face is symmetrical with respect to lateral translations, i.e. it is, along the object contact face, not curved in section perpendicular to the conveying direction.

Concerning the joining material, there are two basic groups of embodiments. In a first group, the joining material is a thermoplastic material. Then, activating implies that the joining material is made flowable. `Making flowable' implies that the joining material is liquefied or at least plasticized sufficiently for the material to be capable to flow upon being subject to the pressing force. If a glass transition temperature is defined, this implies that the material is at least locally brought to a temperature above the glass transition temperature. In crystalline thermoplastic materials, at least a portion of the joining material may in embodiments be brought above its melting temperature.

In these embodiments, the joining material may be caused, by the pressing force, to interpenetrate structures of the object or the cover layer, respectively. After re-solidification a positive fit connection between the object and the cover layer results.

Such structures capable of being interpenetrated may be pores present in the object or cover layer, respectively. Also undercut deliberately formed structures are possible. In addition or as an even further alternative, the structures may be formed during the process only, due to material inhomogeneities. Examples of materials having such structures include wood or wood composites, but also solid foams and further materials having pores or other hollow spaces.

The one contact surface that comprises the joining material may comprise at least one energy director of the joining material. Such energy director may for example be constituted by a rib, for example extending essentially parallel to the conveying direction. Alternative shapes of energy directors, for example ribs extending in other directions, or humps, are possible also. Energy directors are known from ultrasonic welding applications. They assist initiation of the process of making the thermoplastic material flowable.

In addition or as an alternative to energy directors of the joining material, also the one contact surface that does not comprise the joining material but faces the joining material may form at least one energy director.

As an even further alternative, if the cover layer is comparably thin, it is an option that in addition or as an alternative the sonotrode may comprise one or more energy directing structures, such as at least one rib extending essentially parallel to the conveying direction.

If the joining material is a thermoplastic material, instead of being interpenetratable by the joining material, or in addition thereto, the other contact surface may comprise a further thermoplastic polymer weldable to the joining material, or a material capable of forming an adhesive connection with the joining material.

In a second group of embodiments, the joining material is curable, and activating implies initiating and/or accelerating the curing process. This initiating and/or accelerating may be directly by the vibration, i.e. the vibration itself may initiate and/or accelerate the curing process. In addition or as an alternative, the vibration may cause a temperature rise by mechanical vibration energy being absorbed, and this heating may then initiate and/or accelerate the curing process. Such absorption of vibration energy may take place directly in the joining material, and/or it may take place in adjacent structures of the object and/or the cover layer, and thus indirectly heat the joining material.

In embodiments in which the joining material is a curable adhesive, the joining material may be flowable initially. The method may comprise a step of dispensing the joining material on the object and/or on the cover layer, whereafter the object and/or the cover layer, respectively, comprises the joining material. In a continuous process, the dispensing may be carried out by a device arranged in front of the sonotrode - and, if applicable, a pre-pressing device - with reference to the conveying direction.

Also in embodiments of the second group, the joining material may be caused, by the pressing force, to interpenetrate structures of the object (or the cover layer) so that after hardening of the joining material a positive connection results, possibly in addition to an adhesive connection.

In embodiments, the step of applying the pressing force and mechanical vibration is followed by a step of applying a post-pressing force (consolidation pressing force). If this is implemented in an installation carrying out this step and the pressing force and vibration application step continuously, a post-pressing device may be arranged behind the sonotrode (or behind at least one of the sonotrodes, often behind all of the sonotrodes if multiple sonotrodes are used) with reference to the conveying direction. In cases of continuous conveying, the conveying velocity and a width of the respective contact faces (active width) of the sonotrode and the post-pressing device, respectively, define the time during which the pressing/vibration application step/the consolidation step acts on a spot on the cover layer and the object. The active width of a post-pressing device may be chosen to be such that the consolidation time during which the consolidation pressure is applied is similar to the time during which the vibration acts. For example, the post-pressing time may be between about 50% and 300% of the vibration application time.

Generally, the active width (extension along the conveying direction along which the sonotrode makes contact with the cover layer) is in many embodiments substantial and much higher than it would be the case for a rolling sonotrode. A rolling sonotrode or other sonotrode with a circularly rounded distal outcoupling face will generally have an active width that is of the same order as the path *p* into the direction perpendicular to the object surface by which the cover layer is moved relative to the object by the effect of the sonotrode (i.e. by how deep the cover layer is pressed into the object), namely it will be about π/2 times p. Due to the approach of the present invention, the active width can be much higher than this. Especially, it may amount to more than 5 times or more than 10 times the length of path p. Especially, it may be at least 1 cm (or at least 1 cm per sonotrode), at least 3 cm (or at least 3 cm per sonotrode) and for example 5 cm (or 5 cm per sonotrode) or more.

The post-pressing device may comprise at least one post-pressing roller pressing the cover layer against the object. In addition or as an alternative, it may comprise at least one pressing shoe. Pressing shoes have the advantage of making higher active widths possible than rollers. In case multiple shoes are used, they are capable of being arranged with only minimal distances between them, in contrast to rollers the distance between which is dictated by their diameter. Also, the cover layer has a smooth surface at the end of the process if a pressing shoe or a plurality of pressing shoes is/are used for post-pressing. A possible disadvantage of a pressing shoe is that it causes, by friction, some resistance against the conveying movement. Therefore, depending on the requirements and equipment, pressing rollers and/or pressing shoes may be chosen for the post-pressing step.

The post-pressing device may be stationary if the sonotrode is stationary, too.

In embodiments, the post-pressing device or an element thereof applies mechanical vibration also (second mechanical vibration), for example for reducing a mechanical resistance against the conveying movement. If the joining material is thermoplastic (first group), the amplitude and frequency of such second vibration then may be chosen so that the overall energy input into the cover layer and the object is much smaller than the energy input during the step of applying the (first) vibration so that consolidation of the joining material remains possible. For example, the energy input by such second vibration may be lower than the energy input during the step of applying the first vibration by at least a factor 5 or at least a factor 10.

In addition or possibly as an alternative to a post-pressing device, the method may also comprise using a pre-pressing device that may, in a continuous process, be arranged in front of the sonotrode.

Also such pre-pressing device, like the post-pressing device, may optionally be capable of applying mechanical vibration also, i.e. to act as a kind of sonotrode, however with reduced power, for example reduced amplitude, compared to the sonotrode(s) that acitivate(s) the joining material.

In a group of embodiments, more than one sonotrode is used. Multiple sonotrodes may be advantageous to increase the processing speed. Increasing the processing speed implies increasing the conveying velocity. For a given energy input needed for making the joining material flowable, this implies that the power by which the sonotrode is operated needs to be increased. However, in practice there may be practical limits to the power that can be coupled from a sonotrdode into an assembly (limits of a vibration generating apparatus setting the sonotrode into vibration, and/or mechanical stability limits of the sonotrode itself). Therefore, arranging multiple sonotrodes one after the other may be beneficial. It is an achievement of the present invention that plurality of sonotrodes may be arranged one after the other at comparably short distances, for example as small as 1 mm, since in contrast to prior art rolling sonotrodes, no lower limit to the distance between subsequent sonotrodes is dictated by the sonotrode geometry. In embodiments, the distance between subsequent sonotrodes is not higher than a width of a sonotrode.

As an alternative to multiple sonotrodes arranged stationarily behind one another, sonotrodes moving behind each other for example on a rotating band are also an option. The speed by which they move nevertheless may be different from the speed of the cover layer to yield a relative movement between sonotrode and cover layer.

More in general, due to the increased active width compared to the prior art, an increased processing speed is possible. For example, the conveying velocity may be at least 10 m/min or even at least 20 m/min or 30 m/min or more, compared to about 3 m/min achievable when rolling sonotrodes are used.

In particular, experiments show that for establishing, with the aid of a thermoplastic joining material being made flowable (i.e., liquefied or at least plasticized) by application of ultrasonic vibration energy, a positive fit connection between two objects, application of the (for example ultrasonic) vibration energy needs to be longer than for an ultrasonic welding process. Similarly, for activating a curable material to cure, the application of the vibration energy needs to be longer. The need of the longer application time is in particular due to the fact that more material needs to be activated compared to ultrasonic welding, and in embodiments activated material also needs to be dislocated. Usually, an application time of a few seconds is needed, e.g. in the range of 3 to 5 sec. This means that for establishing the proposed joint in a continuous process and using a stationary sonotrode of an extension in conveying direction of say 250 mm would allow a conveying speed of at the most 5 m/min, or even considerably less when using a rolling sonotrode. In contrast thereto, the approach according to the invention enables the above-mentioned clearly higher processing speed, with or without the use of multiple sonotrodes.

If the installation used for carrying out the method comprises multiple sonotrodes, the relevant parameters of the sonotrodes may be identical but do not need to be.

Especially, the angle of the coupling-out face to the object contact surface, as well as the amplitude and possibly also geometries of the different sonotrodes may be chosen differently, depending on the requirements that may be dictated by materials involved etc. For example, a joining material with a relatively high temperature required for making it flowable may need a rather high energy input on an initially small path, this suggesting that a coupling out face of a first sonotrode has a relatively flat angle and the sonotrode vibrates with a relatively large amplitude, whereas a subsequent sonotrode may have a steeper angle and/or a smaller amplitude, etc.

By varying the angle of the sonotrode, the active surface of the sonotrode will change, and as a consequence the pressure will also be adapted, wherein a bigger slope (larger angle) implies a higher pressure. If multiple sonotrodes are used, as a rule of thumb the more sonotrodes there are the flatter they are arranged, i.e. the angles may go down as a function of the number of sonotrodes.

Multiple sonotrodes may be synchronized, although experiments show that this may not be necessary.

Both, if a single sonotrode is used or if multiple sonotrodes are used, the orientation of the sonotrode may be used as a variable parameter during the process. For example, in embodiments if a corner of the first object approaches the sonotrode, the angle between the coupling-out face to the object contact surface may temporarily be reduced so that the pressing force goes down at the corner, thereby enabling a smooth finish. Both, angle and pressing force may be varied dynamically during the process, for example using a pneumatic device for holding the sonotrode.

In embodiments, for example in embodiments in which the cover layer comprises at least one energy director, the lateral position (y-position) of the cover layer with respect to the object can be precisely defined.

Especially f the object is a board, and the cover layer is to be attached to small side ("edge") of the board the cover layer lateral guidance of the cover layer relative to the object may be an issue. In embodiments, the method of joining the cover layer to the object thus comprises laterally guiding the cover layer relative to the object.

In these embodiments, the cover layer can optionally be somewhat broader than the board small side to deal with tolerances. Laterally guiding, however, makes possible that compared to the prior art the width of the cover layer may be reduced.

For example, in embodiments, the object is a hollow core board, with a relatively low density interlining layer sandwiched between two higher density building layers. Joining the cover layer then especially involves joining the cover layer to the building layers.

Also, if in embodiments in which the object is a hollow core board and the cover layer has energy directors, the positioning of these with respect to the cover layer needs to be defined.

Laterally guiding may comprise one or more of the following possibilities:
- The method may comprise using a structural feature of the cover layer to laterally guide the cover layer relative to the object. Such structural feature may for example comprise a protrusion of the cover layer engaging with an indentation or with a limitation of the object
- It is also possible that the object has a guiding feature, for example protrusion, engaging with an indentation or limitation of the cover layer.
- Further, it is possible that the sonotrode has a guiding feature. Especially, the sonotrode may have in indentation receiving the cover layer in a positionally defined manner. If the positional relationship between the sonotrode and the object(s) is well-defined, for example due to the machinery used, this will also define the relative position of the cover layer relative to the object. Especially (but not only) if the positional relationship between sonotrode and object is not fully defined by the machinery, then a guiding feature of the sonotrode may also guide the object. For example, the sonotrode may comprise a guiding indentation (for example extending along the entire active width or along a part thereof) that accommodates the cover layer and that also engages the first object. This may for example be a guiding indentation the depth of which is larger than a thickness of the cover layer.
- It is also possible to use a separate guiding element for guiding. Such guiding element may for example be a guiding strip and extend along the active width and remain stationary relative to the sonotrode, or it may extend along a full length of the cover layer and/or of the object (and then may possibly be conveyed along with them). The guiding element may accommodate the cover layer and engage the first object in a way that the lateral position of the guiding element - and thereby also of the cover layer - relative to the object is defined.
- In addition or as an alternative to the above possibilities, lateral guiding may be achieved by a separate mechanical guiding device, for example comprising rollers to guide the cover layer and/or the object.

Such guiding may take place during the entire process.

In embodiments, the structural feature may for example extend along at least one interior surface of a cover layer.

In other embodiments, the object is a solid board, for example of a wood composite (chipboard, particle board, etc.).

Generally, in many embodiments the object is board-like (solid board, hollow core board, etc.), with two large surfaces and edges extending along a periphery of the object. The cover layer may then for example be a so-called `edge band' used for sealing and/or reinforcing and/or decorating at least one of the edges. Such edge band may comprise a single layer, or it may comprise multiple layers.

Especially, but not only, in these embodiments with a board-like object, the method may further comprise, after a re-solidification, removing, for example cutting away, portions of the cover layer that laterally protrude from a lateral outer edge of the object of the joining material.

Especially, but not only, in these embodiments with a board-like object, the cover layer or the object may form a sealing pad being a structure that has a slightly greater dimension than an average dimension towards the contact surface it faces, the sealing pad being arranged to lie at a lateral outer edge of the object after joining.

In embodiments, the cover layer may be present on a feed roller initially, and the process may involve providing the cover layer from the feed roller.

The cover layer and the object is generally conveyed with a same conveying velocity. Conveying may comprise conveying a plurality, for example a large number, of the objects in succession.

The sonotrode used for the process may for example be generally metallic. It may however have a coating of a not metallic material, such as of a polymer with damping properties.

In addition or as an alternative, a separate protection layer may be placed between the sonotrode and the cover layer during the step of applying the mechanical vibration. Such protection layer may be a paper strip or a strip of a flexible polymer membrane. The separate protection element may be conveyed also during the process, however, with a for example much slower conveying speed than the object and the cover layer (and optionally in the opposed direction), and for example intermittently.

As mentioned, a main application of method and installation according to the invention is the joining of edge strips comprising the joining material to edges of flat objects (in particular boards) comprising a porous or fibrous material, such as e.g. wood or chipboard. However, method and installation according to the invention are applicable also for joining edge strips to edges of flat objects, wherein the object comprises the joining material, either a priori or by being dispensed during the process. Furthermore, method and installation according to the invention are also suitable for other applications, in which in particular the cover layer is not strip-shaped and/or the cover layer is attached not to the edge of a board-shaped object, but to any surface of an object of any shape.

In a group of embodiments, the method may comprise the step of preheating the joining material prior to activating. For example, preheating may comprise preheating the joining material in a contactless manner for a time sufficient for raising the temperature of the joining material to above its glass transition temperature. The step of pressing and applying the mechanical vibration energy may then be carried out before the temperature of the preheated joining material drops below the glass transition temperature of the joining material. Such step of preheating may be carried out after or before the step of bringing into contact.Preheating may be carried out by at least one of:
- Hot air;
- Electromagnetic energy, wherein a susceptor or absorber of the electromagnetic energy is integrated in the joining material, arranged or arrangeable in the vicinity of the joining material and/or constituted by the thermoplastic polymer base of the joining material. Electromagnetic energy impinging on the susceptor or absorber may comprise electric or magnetic induction or by absorption of electromagnetic radiation. The susceptor or absorber may for example be integrated in the joining material and consist of particles or fibers dispersed in the joining material.

Preheating may for example be carried out in a preheating zone across which the cover layer is conveyed prior to being in contact with the sonotrode(s).

Mechanical vibration or oscillation suitable for the method according to the invention has preferably a frequency between 2 and 200 kHz (even more preferably between 10 and 100 kHz, or between 20 and 40 kHz) and a vibration energy of 0.2 to 20 W per square millimeter of active surface. The vibrating tool is e.g. a stationary sonotrode designed such that its contact face oscillates predominantly in the direction of the tool axis (longitudinal vibration) and with an amplitude of between 1 and 100µm, preferably around 30 to 60 µm.

Thermoplastic joining materials being suitable for the method according to the invention are based on a thermoplastic polymer, which is solid at ambient temperatures, which comprises C, P, S or Si based chain molecules, and which transforms from solid into liquid or flowable above a critical temperature range, for example by melting, and re-transforms into a solid material when again cooled below the critical temperature range, for example by crystallization, whereby the viscosity of the solid phase is several orders of magnitude (at least three orders of magnitude) higher than of the liquid phase. The thermoplastic polymer will generally comprise a polymeric component that is not cross-linked covalently or cross-linked in a manner that the cross-linking bonds open reversibly upon heating to or above a melting temperature range. In addition to the thermoplastic polymer, the material may comprise a filler, e.g. fibers or particles without thermoplastic properties or with thermoplastic properties including a melting temperature range which is considerably higher than the melting temperature range of the basic polymer.

Examples for the polymer base of thermoplastic joining materials applicable in the method according to the invention are thermoplastic polymers, co-polymers or filled polymers, comprising e.g. polyethylene, polypropylene, polyamides (in particular Polyamide 12, Polyamide 11, Polyamide 6, or Polyamide 66), Polyoxymethylene, polycarbonateurethane, polycarbonates or polyester carbonates, acrylonitrile butadiene styrene (ABS), Acrylester-Styrol-Acrylnitril (ASA), Styrene-acrylonitrile, polyvinyl chloride, polystyrene, or Polyetherketone (PEEK), Polyetherimide (PEI), Polysulfon (PSU), Poly(p-phenylene sulfide) (PPS), Liquid crystall polymers (LCP) etc. LCPs are of particular interest since their sharp drop in viscosity during melting enables them to penetrate in very fine spaces in the penetrable material.

In applications of the method according to the invention a contact surface of the cover layer and a contact surface of the object face each other in the joint to be established. At least part of this contact surface of one of the cover layer and the object comprises the joining material constituting a first joining region. At least part of this contact surface of the other one of the cover layer and the object constitutes a second joining region whose position corresponds to the position of the first joining region and which is equipped for being able to be joined to the first joining region with the aid of the joining material being liquefied or at least plasticized.

In a first exemplary application of the method according to the invention, the second joining region comprises a material which is penetrable by the joining material when in its liquefied or at least plasticized state. As stated already further above, an example for this first embodiment of the method according to the invention is a process in which an edge strip comprising a thermoplastic polymer material is joined to an edge of a board consisting of e.g. wood or chipboard.

Suitable penetrable materials are solid materials such as wood, plywood, chipboard, cardboard, concrete, brick material, porous glass, foams of metal, ceramic, or polymer materials, or sintered ceramic, glass or metal materials, wherein such materials comprise spaces into which the liquefied material can penetrate which spaces are originally filled with air or with another displaceable or compressible material. Further examples are composite materials which have the above stated properties or materials with surfaces comprising a suitable roughness, suitable machined surface structures or suitable surface coatings (e.g. consisting of particles). If the penetrable material has thermoplastic properties it is necessary, that it maintains its mechanical strength during the joining process either by further comprising a mechanically stable phase or by having a considerably higher melting temperature than the joining material.

The joining material and the penetrable material need to be adapted to each other such that a desired penetration is possible. A material pairing which has proved to be advantageous is e.g. the pairing of chipboard (penetrable material) and a joining material comprising a polyamide.

In a second exemplary application of the method according to the invention the second joining region comprises protrusions of a material which is not liquefiable under the process conditions, the protrusions preferably comprising an undercut structure. In the joining process, the protrusions of the second joining regions are embedded in the joining material of the first joining region such forming a positive fit connection between the cover layer and the object.

The non-liquefiable material of the protrusions may be a polymer based material, wherein the polymer base may be thermoset or thermoplastic. In the case of a thermoplastic polymer the protrusion material needs to have a melting temperature which is considerably higher than the melting temperature of the joining material (at least 50°C higher), i.e. the thermoplastic polymer has at least one of a higher melting temperature, or a considerably higher viscosity at the melting temperature of the material to be liquefied and/or it is filled to a considerably higher degree. Furthermore, the protrusion material may also be a metal, a glass or a ceramic material.

In a third exemplary application of the method according to the invention, the joint to be achieved in the joining process is not a positive fit connection but a weld or an adhesive connection. For a weld connection, the second joining region comprises a material based on a thermoplastic polymer which is liquefiable under the conditions of the joining process and which is wettable by the liquefied joining material. For an adhesive connection, the second joining region comprises a material which is not liquefiable under the process conditions and is wettable by the liquefied joining material. An adhesive for the adhesive connection could be pre-coated on the cover layer or the object or both.

In an even further exemplary application of the method, the joining material is curable. In this text, a curable material or a "resin" denotes any substance that is flowable (generally a viscous liquid) and is capable of hardening permanently by covalent bonds generated between molecules of the resin and/or between molecules of the resin and other substances. For example, the resin may be a composition comprising a monomer or a plurality of monomers or a prepolymer in a flowable state that is capable of changing irreversibly into a polymer network by curing. An example of a curable material is an epoxy based resin typically used in industry. Other examples include compoisitions on a polyurethane prepolymer basis

An installation according to the invention is equipped for carrying out the method as described in this text. It comprises:
a feeding zone equipped for arranging the cover layer and the object with the contact surface of the cover layer and the contact surface of the object facing each other, and for bringing the contact surface of the cover layer in contact with the contact surface or the object,
a liquefaction zone arranged downstream of the preheating zone and being equipped with a vibration device comprising at least one for example stationary sonotrode arranged for applying mechanical vibration and a pressing force to an outer surface of the cover layer,
an object conveyor for conveying the object (for example a plurality of objects in succession, for example boards) in a continuous manner in a conveying direction through the feeding zone and the liquefaction zone,
and a cover layer conveyor for feeding the cover layer into and through the feeding zone.

The sonotrode has a coupling-out face a coupling-out face portion of which is not parallel to the object contact surface of the object so that a distance between the sonotrode and the object contact surface continuously decreases along the coupling-out face portion as function of a position along the conveying direction.

The installation may further comprise a consolidation zone with a post-pressing applicator device.

### BRIEF DESCRIPTION OF THE DRAWINGS

The invention and exemplified embodiments of method and installation according to the invention are described in further detail in connection with the appended figures, in which same reference signs designate same or element or elements having a same function, and wherein the figures show:
- **Fig. 1**: an object and a cover layer joined in a stationary process according to the prior art;
- **Fig. 2**: a schematic representation of a method for joining a cover layer to an obj ect;
- **Fig. 3**: a variant with multiple sonotrodes;
- **Fig. 4**: a variant with a sonotrode with variable angle;
- **Fig. 5**: a post-pressing device in the form of a pressing shoe;
- **Figs. 6-9**: pairings of objects being hollow core boards and of cover layers;
- **Fig. 10**: an installation for carrying out the method;
- **Fig. 11**: a variant with the joining material being an adhesive; and
- **Figs. 12-15**: further pairings of objects being hollow core boards and of cover layers together with sonotrodes, the respective arrangement being equipped for laterally guiding the cover layer relative to the respective obj ect.

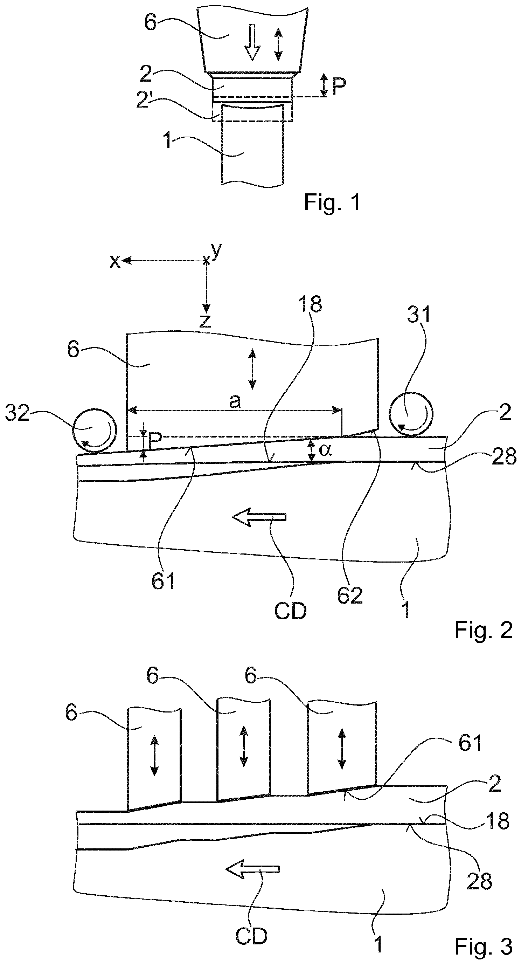

In this, Figures 1, 6-9, and 12-15 show schematic partial cross sections through a plane perpendicular to the x direction (the conveying direction if applicable), whereas Figs. 2-5, 10 and 11 depict schematic side views.

### DESCRIPTION OF THE PREFERRED EMBODIMENTS

**Figure 1** shows an object 1 to which a cover layer 2 is joined in a stationary process according to the prior art, which process comprises coupling mechanical vibration energy into the cover layer and/or the object to make thermoplastic material flowable and to cause it to interpenetrate structures of at least one of the elements to be joined, whereby after re-solidification a connection between the object and the cover layer results.

The cover layer 2 of Fig. 1 is assumed to comprise thermoplastic material. For joining, a sonotrode 6 presses the cover layer 2 against the object 1, and as a consequence of the thermoplastic material becoming flowable and of the pressing force, the cover layer and the object are subject to a relative movement by a path *p*. The dashed line shows the cover layer 2' at the end of the process, with cover layer material interpenetrating the object 1.

If this process is modified to become a continuous process, according to the prior art the stationary sonotrode that is subject to the movement by the path *p* is replaced by a rolling sonotrode or a sequence of rolling sonotrodes. If a single rolling sonotrode is used, this implies that the process has to be carried out relatively slowly (the smaller the diameter of the sonotrode roll the slower), because the movement by the path p into the direction perpendicular to the object surface has to be made given a very short active width defined by the surface part along which the sonotrode roll makes contact with the cover layer. If a plurality of rolling sonotrodes is used, there is the challenge that the contact surfaces between subsequent rolls and the cover layer can not be arbitrarily close to each other, for geometrical reasons because of the extension of the rolls.

It is an insight of the present invention that the principles of the stationary process may be implemented in a continuous process without the mentioned disadvantages of a rolling sonotrode by means of a sonotrode that has a coupling-out face portion at an angle to the surface of the cover layer, along which the cover layer slides relative to the sonotrode.

This is illustrated in **Figure 2****.** The object 1 and the cover layer 2 are together conveyed in a conveying direction CD, whereas the sonodrode 6 vibrates at a stationary position.

The object 1 may for example be generally flat, board-like object having two large surfaces and edges extending along a periphery of the object. It may for example be a solid board of essentially homogeneous material distribution or a so-called hollow core boards (HCB), comprising two comparably hard and dense cover layers, with a less dense interlining material between the cover layers. In the case of a HCB, the process of causing flowable thermoplastic material to flow into structures of the object may comprise causing thermoplastic material to flow into structure of the cover layers, whereas the interlining layer may in embodiments be too soft for causing sufficient friction to make the thermoplastic material flowable.

An edge of the board-like object 1, being the upper edge in the depicted configuration, forms the object contact surface 18.

The cover layer may be a strip-like material to be joined to at least one edge of the board if the board is generally flat. The cover layer may consist of the thermoplastic material (joining material), or it may comprise a layer of thermoplastic material and a not thermoplastic outer layer, for example a layer comprising a decoration. On the side of the cover layer contact surface 28, the cover layer may comprise one or more energy directors, especially in the form of ribs or humps. In embodiments, the energy director(s) comprise(s) at least one longitudinally extending rib, i.e. a rib extending in the conveying direction.

Possible methods of manufacturing a cover layer or a thermoplastic portion thereof include extrusion or a calender process, or , for special applications, by 3D printing.

If the cover layer is to be joined to an edge (such cover layers are sometimes called "edge bands"), then the band width, i.e. the extension in a dimension perpendicular to the large surfaces of the object, may be somewhat larger than the thickness of the object, and the process may comprise positioning the cover layer so that it projects on both sides at least by a bit, and may comprise removing the projecting portions of the cover layer after the step of joining.

The sonotrode has a coupling-out face 61 that is essentially plane with a foremost cover layer receiving portion 62 that is convexly curved. Alternatively, it could have other shapes with be convexly curved, plane and/or concavely curved portions.

Due to its shape and due to its position relative to the conveyed object 1 (and given the thickness of the cover layer), the coupling-out face 61 defines an active surface a that is considerably larger than the active surface of a rolling sonotrode for a same object-cover-layer-combination. The angle α between the coupling-out face 61 (or at least a portion thereof) and the surface of the first object causes the cover layer to be moved along a path *p* in a direction perpendicular to the object surface when object surface and cover layer are conveyed by an active width *α* of the active surface.

By this pressing against the first object while vibration impinges, thermoplastic material of the cover layer is caused to penetrate into structures of the object 1. This is illustrated in Fig. 2 by the cove layer being moved partially into the first object on the left-hand side of the figure. This yields, after re-solidification, a connection between the cover layer and the object.

In variants, the thermoplastic material may also be present in the object (with the cover layer having structures capable of being interpenetrated by the thermoplastic material) or possibly on both, the object and the cover layer (with a weld being generated by the process. The present invention is especially advantageous, however, if the object or the cover layer has structures capable of being interpenetrated and the other one has the thermoplastic material, because in a process that involves interpenetration, the process times tend to be longer and the path by which the cover layer is moved vertically (perpendicularly to the conveying direction) is longer.

Fig. 2 also shows an optional first pre-pressing device 31, for example a pressing roller, which presses the cover layer 2 against the object 1 before the vibration is coupled into it. This optional pre-pressing device 31 may contribute to the stability of the process and may also be used for keeping the cover layer 2 in a defined position relative to the object 1 during the step of using the sonotrode to press the cover against the object and to apply mechanical vibration, thereby coupling energy into the assembly.

Fig. 2 further shows a post-pressing device 32 (or consolidating device), here being in the form of at least one pressing roller. The post-pressing device may be beneficial for example in view of a tendency of the material of the cover layer to relax prior to the flowable thermoplastic material being re-solidified. The function of the post-pressing device is to apply a holding pressure after the process until the thermoplastic material has become sufficiently solid.

Fig. 2 also depicts a coordinate system. In accordance with the convention used in this text, generally the +x-direction corresponds to the conveying direction, which is essentially parallel to the object surface. Directions along the y axis being also essentially parallel to the object surface, and being perpendicular to the x axis, are sometimes referred to as "lateral directions" in this text. The pressure applied by the sonotrode onto the cover layer is mostly at least approximately into the +z direction.

**Figure 3** depicts parts of an installation having a plurality of sonotrodes 6 arranged in a sequence so that the sonotrodes impinge on the cover layer one after the other. In many embodiments, the sonotrodes 6 will be arranged close to each other (the distance between the sonotrodes being exaggerated in Fig. 3) so that there is only minimal cooling and relaxation of the thermoplastic material between subsequent stages. If a plurality of sonotrodes is used, as in Fig. 3, then the sonotrodes may optionally be different in at least one of:
- Dimensions
- Pressure setting
- Amplitude
- Angle α of the coupling-out face 61 to the object contact surface 18

These parameters, which may but do not need to be different, may be adapted to optimize the joining process, depending on the materials and dimensions of the object and of the cover layer.

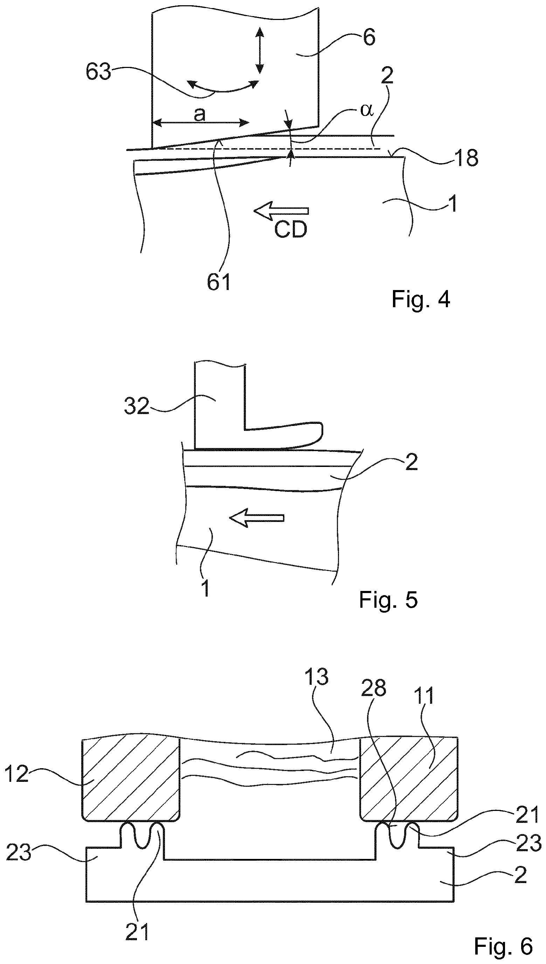

As illustrated in **Figure 4****,** the angle α between the coupling-out face 61 and the object contact surface 18 may not only be set in accordance with the particular needs, it may also be used as a variable parameter that may be adapted during the process, as illustrated by the arrow 63 in Fig. 4. A variation of the angle α does not only vary the active width a but also, given a conveying velocity, an effective forward pressing force. A variation of the angle α may be much quicker than an adaptation of the pressing force by pneumatic means. A variation - for example temporary reduction - of the pressing force may in embodiments for example be advantageous at a corner of the board-like object, i.e. the pressing force may for example be reduced by making the angle α flatter every time an object corner reaches the sonotrode 6.

The post-pressing device 32 in Fig. 2 is illustrated to comprise at least one pressing roller. Pressing rollers have the advantage of providing little resistance against a relative movement of the object with the cover layer. In many embodiments, however, an alternative post-pressing device having a larger active width is preferred. **Figure 5** very schematically illustrates a post-pressing device 32 in the form of a pressing shoe. The post-pressing device of the installation may comprise a plurality of post-pressing elements in the form of pressing shoes and/or pressing rollers arranged in a sequence. The dimensions and arrangement of the post-pressing device and the conveying velocity are adapted to each other so that the pressing force is maintained - with or without interruptions between subsequent elements - for a time sufficient to consolidate the portions of the thermoplastic material that was flowable.

**Figure 6** showing a detail of a section along a plane perpendicular to the conveying direction illustrates a few features that may be applied independently of each other:
- The object 1 is a hollow core board having two building layers 11, 12 and an interlining layer 13 between the building layers 11, 12. The building layers 11, 12 may for example be of wood, plywood, chipboard or of a material comprising a thermoplastic or thermoset polymer. The interlining layer may be a lightweight core, e.g. of a foam material or of a cardboard honey comb structure or of a honeycomb (or similar) structure comprising thermoplastic material. When the cover layer is joined to the object, it is secured to the building layers 11, 12, whereas in embodiments the interlining layer 13 may be not stable enough for providing sufficient mechanical resistance to make the thermoplastic material flowable when the pressing force and the mechanical vibrations apply.
- The cover layer 2 comprises at least one energy director 21. In the depicted embodiment, the cover layer comprises two energy directing ribs 21 on each side (i.e. for each building layer). The energy directing ribs enxtend parallel to the conveying direction.
- The cover layer 2 forms outer sealing pads 23, i.e. portions that have a slightly greater dimension towards the object, whereby it is secured that after the process the connection between the cover layer and the object extends to the lateral outer edges, thereby yielding a smooth and sealing j oint.

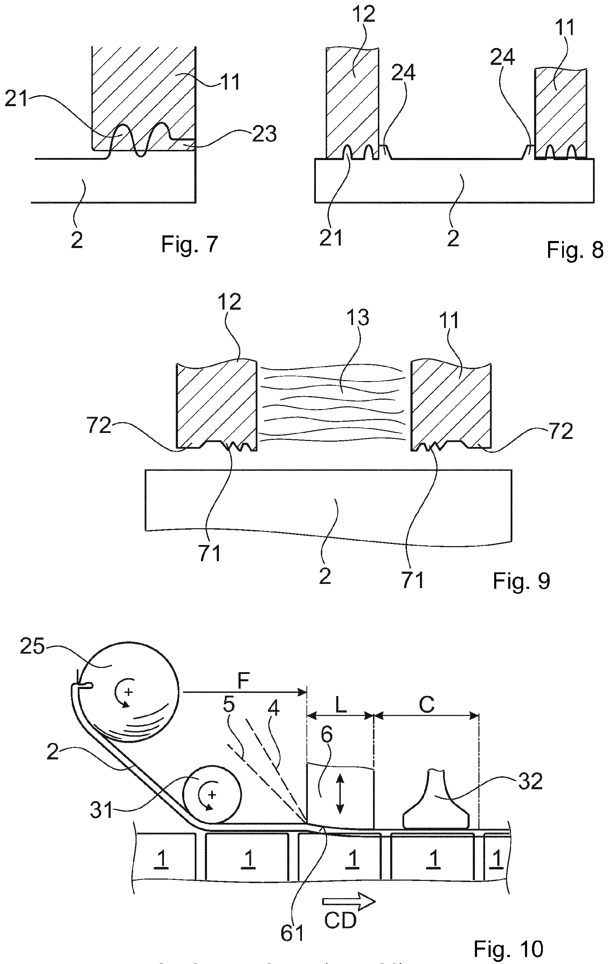

**Figure 7** shows a detail illustrating how the sealing pad 23 ensures that after the process the lateral outer edge is sealed.

**Figure 8** illustrates an even further optional feature that may but does not need to be combined with other optional features. Namely, the cover layer 2 comprises at least one guiding protrusion 24, for example a guiding ridge that defines the lateral position of the cover layer 2 relative to the object, here by extending along an inner surface of the respective building layers 11, 12. In embodiments, the cover layer may be dimensioned to extend laterally on both sides further than the thickness of the board-like object, and the process may comprise the post-joining step of removing laterally protruding portions of the cover layer after the joining. Nevertheless, the definition of the position of the cover layer may be beneficial in embodiments, especially if the cover layer comprises structures such as the energy director(s) 21 and/or a sealing pad.

**Figure 9** shows an alternative in which the object comprises the energy directors 71 and/or a sealing pad 72. The cover layer may then be absent any particular structure, and a lateral positioning of the cover layer relative to the object does not need to be precise, only depending on the lateral width of the cover layer in relation to the thickness of the object.

Structures like the energy directors 71 and/or the sealing pad may be made to the building layers 11, 12 - if the object is a hollow core board - or other elements that define the object contact surface may be made by milling or an other material-removing process, and/or they may be made by a material deforming process, such as by imprinting.

**Figure 10** schematically depicts an installation for carrying out the method on a plurality of objects 1 conveyed in succession in a continuous process. The installation comprises a per se known conveyor (not shown) for conveying the objects in the conveying direction CD. The cover layer 2 is for example fed-in from a feed roller 25. A deflection roller 31 also serves as pre-pressing device. Fig. 10 illustrates one single sonotrode, with the coupling-out face 61 being slightly rounded, i.e. with the angle between the coupling-out face and the object contact surface being not constant along the extension of the sonotrode (such convexly or possibly concavely rounded shape being an option for any embodiment). After the sonotrode, a post-pressing device 32 in the form of a pressing shoe is arranged.

The dashed lines in Fig. 10 illustrate two further options that are independent of each other:
- A separate protection layer 4 may be conveyed - in a conveying velocity that is not necessarily identical with the conveying velocity applying to the objects - to a region between the sonotrode 6 and the cover layer 2. The mechanical vibration is then applied to the cover layer by the sonotrode through the protection layer 4. The protection layer may for example be provided as a strip of paper or as a strip of PTFE (Polytetrafluoroethylene). Such separate protection layer may - for example in addition or as an alternative to a protection coating of the sonotrode - serve for saving the material of the sonotrode, for reducing noise, and/or for preventing undesired marks on the surface of the cover layer after the process, etc.

- At least one additional layer 5 to be fastened to the cover layer is conveyed in a conveying velocity corresponding to the conveying velocity of the objects. Such separate layer may for example be a decoration layer. It may be secured to the cover layer 2 by the process that comprises making material of the cover layer flowable, securing lamination of the additional layer to the cover layer, or possibly by an adhesive coating of the additional layer etc. An additional layer may also be secured to the cover layer in a separate step, as a further option (not shown).

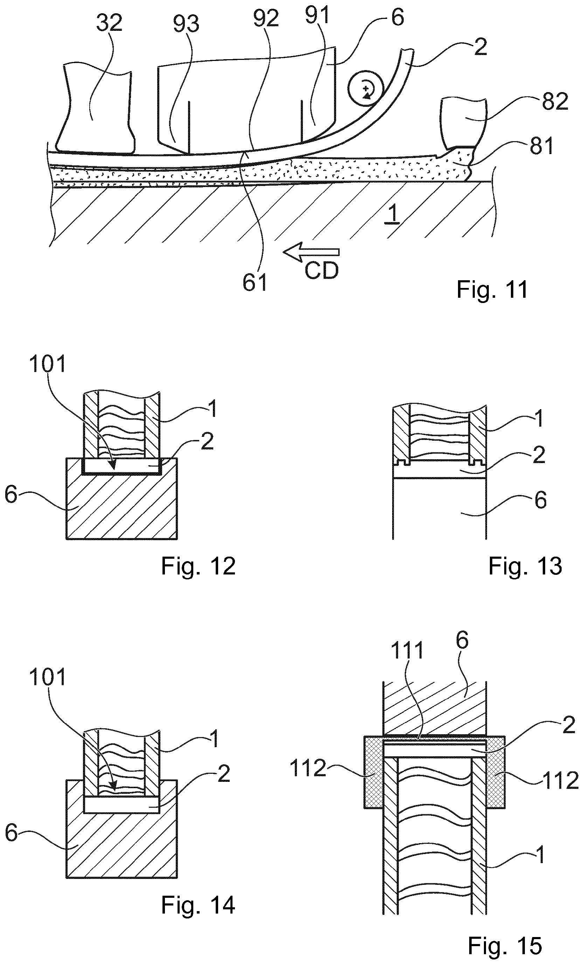

The previously described embodiments rely on the joining material being a thermoplastic material in a solid state, wherein activation comprises making the material flowable. **Figure 11** shows a configuration in which the joining material is a curable adhesive in an initially flowable state. The joining material 81 is dispensed - from a dispensing device 82, to the object 1 - immediately upstream of the sonotrode 6. Due to the direct or indirect (by heating caused by the vibration) effect of the vibration, the curing of the adhesive is substantially accelerated compared to a configuration without the activation, whereby behind the sonotrode and a post-pressing device 32 the joining material is sufficiently cured to secure the cover layer 2 to the object 1 at least provisionally so that the connection is stable enough for transport and further processing steps. Further curing may nevertheless take place after the process shown in Fig. 11.

In embodiments in which the joining material is a curable adhesive, the material of the object and/or of the cover layer may but do not need to be penetrable by the joining material to some extent. For example, the object may comprise a fiber composite with some matrix material removed at the object contact surface or an other configuration as disclosed in WO 2017/178 468. In these embodiments, the effect of the pressing force and the vibration may cause the joining material to (further) penetrate into the object and/or the cover layer, respectively, as illustrated in Fig. 11. The extent to which joining material may penetrate into the object and/or the cover layer has an influence on the path (movement in z direction) by which the cover layer is moved towards the object during the process. In many embodiments, this path p may be substantially shorter than in comparable set-ups with a thermoplastic joining material the joining mechanism of which relies on the interpenetration of object/cover layer material by the thermoplastic joining material. This in turn has an influence on the angle α or, more generally, on the deviation of the coupling-out face from a plane parallel to the object contact surface. Often, for embodiments with a curable joining layer, the angle may be flatter.

Fig.11 yet shows an other feature that is an option not only for embodiments with a curable joining material, but for any embodiment of the invention. More in particular, the coupling-out face 61 of the sonotrode has three distinct portions. An entry portion 91 is rounded convexly. A pressing portion 92 is essentially plane, at an angle to the object contact surface, or possibly slightly convex, and an exit portion 93 that is again rounded. More in general, various shapes may be suitable, with at least a portion of the coupling-out face 61 being such that a distance between the sonotrode and the object contact surface continuously decreases (which may be due to the sonotrode length continuously increasing).

**Figure 12** shows an embodiment in which in contrast to the embodiment of Fig. 8 it is not the cover layer 2 that has a structure for defining its lateral position but the sonotrode 6 has. In Fig. 12, the sonotrode 6 has a receiving indentation 101 for receiving the cover layer 2 in a manner that its lateral (y-) position is defined. If by other means, the position of the object 1 - here being illustrated as a hollow core board - is precisely defined, this also defines the position of the cover layer with respect to the object 1. In Fig. 12, a depth of the receiving indentation 101 corresponds to a thickness of the cover layer or may be smaller than this thickness.

**Figure 13** shows an embodiment in which in contrast to the embodiments of Figures 6-8 it is not or not only the cover layer that comprise a structure, for example for forming an energy director, but in which (also) the first object 1 has such structure. In the embodiment of Fig. 13, the first object is a hollow core board in which each of the two building layers has two energy directing ribs running parallel to the x direction.

In a variant of the embodiment of Fig. 12, a receiving indentation 101 of the sonotrode 6 may be deeper than a thickness of the cover layer, whereby also the first object 1 is guided by the receiving indentation, as shown in **Figure 14****.** Hence, in this embodiment the relative position of the first object 1 and the cover layer 2 is fully defined by the sonotrode 6 if the lateral (y-) extension of both these objects is the same, i.e. if the width of the strip that forms the cover layer corresponds to the thickness of the board that is the first object. This kind of guidance also works if the width of the strip is somewhat smaller than the thickness of the board or vice versa. If the board is a hollow core board of the kind explained hereinbefore, it just has to be assured that both building layers 11, 12 are in contact with the cover layer during the process.

**Figure 15** yet shows a variant in which lateral guiding is achieved by a separate guiding element 111. The guiding element is a guiding strip, for example of Polytetrafluoroethylene (PTFE) or an other not liquefiable material with comparably low friction. The guiding strip may extend along at least the active width of the sonotrode 6 and remain stationary relative to the sonotrode. It is also possible that the guiding strip extends along a full length of the cover layer and is for example delivered together with it, such as from a roll. It has lateral guiding ridges 112 by a having a U-shaped cross section. The distance of the guiding ridges 112 corresponds to a thickness of the first object being a board. The lateral guiding ridges engage with the board along the edge to which the cover layer is to be attached, so that the lateral position of the guiding element - and thereby also of the cover layer - is defined relative to the object.

## Claims

1. A method for joining a cover layer (2) to an object (1), the method comprising the steps of:
providing the cover layer (2) and the object (1), the cover layer (2) comprising a cover layer contact surface (28), and the object (1) comprising an object contact surface (18),
wherein a least one of the cover layer and of the object comprises a joining material,
arranging the cover layer (2) and the object (1) with the cover layer contact surface and the object contact surface facing each other,
bringing the cover layer contact surface (28) in contact with the object contact surface (18),
using a sonotrode (6) to press the cover layer (2) against the object (1) and to apply mechanical vibration to an outer surface of the cover layer (2) for a time sufficient for activating the joining material,
conveying the cover layer (2) and object (1) relative to the sonotrode in a continuous manner in a conveying direction (CD) throughout the steps of arranging, of bringing into contact, of pressing and of applying the vibration,
wherein the step of conveying causes a sliding movement, along the conveying direction, of the cover layer relative to a coupling-out face (61) of the sonotrode, **characterized in that** the coupling-out face (61) has a coupling-out face portion that is not parallel to the object contact surface but at an angle (α) to it, so that a distance between the sonotrode and the object contact surface continuously decreases along the coupling-out face portion as function of a position along the conveying direction.

2. The method according to claim 1, and comprising the step of applying a consolidation pressing force to the cover layer against the object by a post-pressing device arranged behind the sonotrode with reference to the conveying direction, wherein the post-pressing device preferably comprises at least one pressing roller and/or at least one pressing shoe.

3. The method according to claim 2, wherein the post-pressing device applies the consolidating pressure for a time amounting to between 50% and 300% of a time of applying the vibration.

4. The method according to any one of claims 2 or 3, wherein the post-pressing device also applies a mechanical vibration of a frequency and amplitude not sufficient for the joining material to remain flowable.

5. The method according to any one of the previous claims, further comprising the step of using a pre-pressing device to press the cover layer against the object, the pre-pressing device arranged in front of the sonotrode with reference to the conveying direction.

6. The method according to any one of the previous claims, comprising using a plurality of sonotrodes to press the cover layer (2) against the object (1) and to apply the mechanical vibration, the sonotrodes being arranged one behind the other with reference to the conveying direction, wherein for example at least two of the sonotrodes have coupling-out faces (61) the shapes and/or angles with respect to the object contact face of which are not identical.

7. The method according to any one of the previous claims, comprising the step of varying an orientation of the sonotrode with respect to the object contact surface during the sliding movement.

8. The method according to any one of the previous claims, and further comprising laterally guiding the cover layer relative to the object, for example by using a structural feature of the cover layer and/or of the object to laterally guide the cover layer relative to the object, and/or wherein the sonotrode has a guiding feature defining a lateral position of the cover layer relative to the sonotrode.

9. The method according to any one of the previous claims, wherein the sonotrode has a coating of a not metallic material.

10. The method according to any one of the previous claims, and comprising placing a separate protection layer between the sonotrode and the cover layer during the step of applying the mechanical vibration.

11. The method according to any one of the previous claims, wherein the joining material is a thermoplastic material, and wherein activating the joining material comprises making the joining material flowable.

12. The method according to any one of claims 1-10, wherein the joining material is a curable adhesive, and wherein activating comprises initiating and/or accelerating the curing process.

13. The method according to any one of the previous claims, wherein the object is solid and rigid, and wherein using the sonotrode (6) to press the cover layer (2) against the object (1) and to apply mechanical vibration causes at least portions of the joining material in a flowable state to interpenetrate structures of the solid object, so that after solidification of the joining material a positive fit connection between the cover layer (2) and the object (1) results.

14. The method according to any one of the previous claims, wherein an active width (a) being an extension, along the conveying direction, of a region in which the coupling-out face is pressed against the object surface, corresponds to at least 5 times the length of a path p by which the sonotrode moves the cover layer relative to the object in a direction perpendicular to the object surface.

15. An installation for carrying out the method as defined in any one of the previous claims, the installation comprising:
a feeding zone (F) equipped for arranging the cover layer (2) and the object (1) with the contact surface of the cover layer (2) and the contact surface of the object (1) facing each other, and for bringing the contact surface of the cover layer (2) in contact with the contact surface of the object (1),
a liquefaction zone (L) being equipped with a vibration device comprising at least one sonotrode (6) arranged for applying mechanical vibration and a pressing force to an outer surface of the cover layer (2),
an object conveyor for conveying the object (1) in a continuous manner in a conveying direction (CD) through the feeding zone (F) and the liquefaction zone (L),
and a cover layer conveyor for feeding the cover layer (2) into and through the feeding zone (F).
**characterized in that** the sonotrode has a coupling-out face (61) a coupling-out face portion of which is not parallel to the object contact surface of the object but at an angle (α) thereto, so that a distance between the sonotrode and the object contact surface continuously decreases along the coupling-out face portion as function of a position along the conveying direction.

## Patentansprüche

1. Verfahren zum Verbinden einer Deckschicht (2) mit einem Objekt (1), wobei das Verfahren die folgenden Schritte umfasst:
Bereitstellen der Deckschicht (2) und des Objekts (1), wobei die Deckschicht (2) eine Deckschicht-Kontaktfläche (28) und das Objekt (1) eine Objekt-Kontaktfläche (18) aufweist,
wobei die Deckschicht und/oder das Objekt ein Verbindungsmaterial umfasst,
Anordnen der Deckschicht (2) und des Objekts (1) so, dass die Deckschicht-Kontaktfläche und die Objekt-Kontaktfläche einander gegenüberliegen,
in-Kontakt-Bringen der Deckschicht-Kontaktfläche (28) mit der Objekt-Kontaktfläche (18),
Verwenden einer Sonotrode (6), um die Deckschicht (2) gegen das Objekt (1) zu drücken und mechanische Vibrationen auf eine äußere Oberfläche der Deckschicht (2) für eine Zeit einwirken zu lassen, die ausreicht, um das Verbindungsmaterial zu aktivieren,
Fördern der Deckschicht (2) und des Objekts (1) relativ zur Sonotrode in einer kontinuierlichen Weise in einer Förderrichtung (CD) während der Schritte des Anordnens, des In-Kontakt-Bringens, des Drückens und des Anlegens der Vibration,
wobei der Schritt des Förderns eine Gleitbewegung entlang der Förderrichtung der Deckschicht relativ zu einer Auskoppelfläche (61) der Sonotrode bewirkt, **dadurch gekennzeichnet, dass** die Auskoppelfläche (61) einen Auskoppelflächenabschnitt aufweist, der nicht parallel zu der Objektkontaktfläche, sondern unter einem Winkel (α) zu dieser verläuft, so dass ein Abstand zwischen der Sonotrode und der Objektkontaktfläche entlang des Auskoppelflächenabschnitts als Funktion einer Position entlang der Förderrichtung kontinuierlich abnimmt.

2. Verfahren nach Anspruch 1, umfassend den Schritt des Aufbringens einer Verfestigungspresskraft auf die Deckschicht gegen das Objekt durch eine bezüglich der Förderrichtung hinter der Sonotrode angeordnete Nachpressvorrichtung, wobei die Nachpressvorrichtung vorzugsweise mindestens eine Presswalze und/oder mindestens einen Pressschuh umfasst.

3. Verfahren nach Anspruch 2, wobei die Nachpressvorrichtung den Verfestigungsdruck für eine Zeit aufbringt, die zwischen 50 % und 300 % einer Zeit der Einwirkung der Vibration beträgt.

4. Verfahren nach einem der Ansprüche 2 oder 3, wobei die Nachpressvorrichtung auch eine mechanische Vibration mit einer Frequenz und Amplitude anwendet, die nicht ausreicht, damit das Verbindungsmaterial fließfähig bleibt.

5. Verfahren nach einem der vorhergehenden Ansprüche, wobei die Deckschicht mit Hilfe einer Vorpressvorrichtung an das Objekt gepresst wird, wobei die Vorpressvorrichtung in Bezug auf die Förderrichtung vor der Sonotrode angeordnet ist.

6. Verfahren nach einem der vorhergehenden Ansprüche, umfassend die Verwendung mehrerer Sonotroden zum Anpressen der Deckschicht (2) an das Objekt (1) und zum Aufbringen der mechanischen Schwingung, wobei die Sonotroden in Förderrichtung hintereinander angeordnet sind, wobei beispielsweise mindestens zwei der Sonotroden Auskoppelflächen (61) aufweisen, deren Formen und/oder Winkel in Bezug auf die Objektkontaktfläche nicht identisch sind.

7. Verfahren nach einem der vorhergehenden Ansprüche, umfassend den Schritt des Variierens einer Ausrichtung der Sonotrode in Bezug auf die Objektkontaktfläche während der Gleitbewegung.

8. Verfahren nach einem der vorhergehenden Ansprüche, und ferner umfassend das seitliche Führen der Deckschicht relativ zu dem Objekt, beispielsweise durch Verwendung eines strukturellen Merkmals der Deckschicht und/oder des Objekts, um die Deckschicht relativ zu dem Objekt seitlich zu führen, und/oder wobei die Sonotrode ein Führungsmerkmal aufweist, das eine seitliche Position der Deckschicht relativ zu der Sonotrode definiert.

9. Verfahren nach einem der vorhergehenden Ansprüche, wobei die Sonotrode eine Beschichtung aus einem nichtmetallischen Material aufweist.

10. Verfahren nach einem der vorhergehenden Ansprüche, bei dem während des Schritts des Anlegens der mechanischen Schwingung eine separate Schutzschicht zwischen der Sonotrode und der Deckschicht angeordnet wird.

11. Verfahren nach einem der vorhergehenden Ansprüche, wobei das Verbindungsmaterial ein thermoplastisches Material ist, und wobei das Aktivieren des Verbindungsmaterials das Fließfähigmachen des Verbindungsmaterials umfasst.

12. Verfahren nach einem der Ansprüche 1 bis 10, wobei das Verbindungsmaterial ein härtbarer Klebstoff ist und wobei die Aktivierung das Einleiten und/oder Beschleunigen des Aushärtungsprozesses umfasst.

13. Verfahren nach einem der vorhergehenden Ansprüche, wobei das Objekt fest und starr ist, und wobei das Drückens der Deckschicht (2) an das Objekt (1) mit der Sonotrode (6) und das Einwirkenlassen mechanischer Schwingungen dazu führt, dass zumindest Teile des Fügematerials in fließfähigem Zustand Strukturen des festen Objektes durchdringen, so dass nach dem Aushärten des Fügematerials eine formschlüssige Verbindung zwischen der Deckschicht (2) und dem Objekt (1) entsteht.

14. Verfahren nach einem der vorhergehenden Ansprüche, wobei eine aktive Breite (a), die eine Ausdehnung eines Bereichs, in dem die Auskoppelfläche gegen die Objektoberfläche gedrückt wird, entlang der Förderrichtung ist, mindestens der fünffachen Länge eines Weges p entspricht, um den die Sonotrode die Deckschicht relativ zum Objekt in einer Richtung senkrecht zur Objektoberfläche bewegt.

15. Anlage zur Durchführung des Verfahrens nach einem der vorhergehenden Ansprüche, wobei die Anlage umfasst:
eine Zuführungszone (F), die dazu eingerichtet ist, die Deckschicht (2) und das Objekt (1) so anzuordnen, dass die Kontaktfläche der Deckschicht (2) und die Kontaktfläche des Objekts (1) einander gegenüberliegen, und die Kontaktfläche der Deckschicht (2) mit der Kontaktfläche des Objekts (1) in Kontakt zu bringen,
eine Verflüssigungszone (L), die mit einer Vibrationsvorrichtung ausgestattet ist, die mindestens eine Sonotrode (6) umfasst, die so angeordnet ist, dass sie mechanische Vibrationen und eine Druckkraft auf eine Außenfläche der Deckschicht (2) ausübt,
einen Objektförderer zum kontinuierlichen Fördern des Objekts (1) in einer Förderrichtung (CD) durch die Zuführzone (F) und die Verflüssigungszone (L),
und einen Deckschichtförderer zum Zuführen der Deckschicht (2) in und durch die Zuführzone (F).
**dadurch gekennzeichnet, dass** die Sonotrode eine Auskoppelfläche (61) aufweist, von der ein Auskoppelflächenabschnitt nicht parallel zur Objektkontaktfläche des Objekts, sondern in einem Winkel (α) dazu verläuft, so dass ein Abstand zwischen der Sonotrode und der Objektkontaktfläche entlang des Auskoppelflächenabschnitts als Funktion einer Position entlang der Förderrichtung kontinuierlich abnimmt.

## Revendications

1. Procédé d'assemblage d'une couche de couverture (2) à un objet (1), comprenant les étapes suivantes :
fournir la couche de couverture (2) et l'objet (1), la couche de couverture (2) comprenant une surface de contact de la couche de couverture (28), et l'objet (1) comprenant une surface de contact de l'objet (18),
dans lequel la couche de couverture et/ou l'objet comprend un matériau d'assemblage,
disposer la couche de couverture (2) et l'objet (1) de manière à ce que la surface de contact de la couche de couverture et la surface de contact de l'objet se fassent face,
mettre la surface de contact de la couche de couverture (28) en contact avec la surface de contact de l'objet (18),
utiliser une sonotrode (6) pour presser la couche de couverture (2) contre l'objet (1) et pour appliquer une vibration mécanique à une surface extérieure de la couche de couverture (2) pendant une durée suffisante pour activer le matériau d'assemblage,
transporter la couche de couverture (2) et l'objet (1) par rapport à la sonotrode de manière continue dans une direction de transport (CD) tout au long des étapes de disposition, de mise en contact, de pression et d'application de la vibration,
dans lequel l'étape de transport provoque un mouvement de glissement, le long de la direction de transport, de la couche de couverture par rapport à une face d'accouplement (61) de la sonotrode, **caractérisé par le fait que** la face d'accouplement (61) présente une partie de face d'accouplement qui n'est pas parallèle à la surface de contact de l'objet mais qui forme un angle (α) avec elle, de sorte qu'une distance entre la sonotrode et la surface de contact de l'objet diminue continuellement le long de la partie de face d'accouplement en fonction d'une position le long de la direction de transport.

2. Le procédé selon la revendication 1, comprenant l'étape d'application d'une force de pression de consolidation à la couche de couverture contre l'objet par un dispositif de post-pression disposé derrière la sonotrode par rapport à la direction de transport, dans lequel le dispositif de post-pression comprend de préférence au moins un rouleau de pression et/ou au moins un sabot de pression.

3. Le procédé selon la revendication 2, dans lequel le dispositif de post-pressage applique la pression de consolidation pendant une durée comprise entre 50 % et 300 % de la durée d'application de la vibration.

4. Le procédé selon l'une des revendications 2 ou 3, dans lequel le dispositif de post-pressage applique également une vibration mécanique d'une fréquence et d'une amplitude insuffisantes pour que le matériau d'assemblage reste fluide.

5. Le procédé selon l'une quelconque des revendications précédentes, comprenant en outre l'étape consistant à utiliser un dispositif de pré-pressage pour presser la couche de couverture contre l'objet, le dispositif de pré-pressage étant disposé devant la sonotrode par rapport à la direction de transport.

6. Le procédé selon l'une quelconque des revendications précédentes, comprenant l'utilisation de plusieurs sonotrodes pour presser la couche de couverture (2) contre l'objet (1) et pour appliquer la vibration mécanique, les sonotrodes étant disposées l'une derrière l'autre en référence à la direction de transport, dans lequel par exemple au moins deux des sonotrodes ont des faces d'accouplement (61) dont les formes et/ou les angles par rapport à la face de contact de l'objet ne sont pas identiques.

7. Le procédé selon l'une quelconque des revendications précédentes, comprenant l'étape consistant à faire varier l'orientation de la sonotrode par rapport à la surface de contact de l'objet pendant le mouvement de glissement.

8. Le procédé selon l'une quelconque des revendications précédentes, comprenant en outre le guidage latéral de la couche de couverture par rapport à l'objet, par exemple en utilisant une caractéristique structurelle de la couche de couverture et/ou de l'objet pour guider latéralement la couche de couverture par rapport à l'objet, et/ou dans laquelle la sonotrode a une caractéristique de guidage définissant une position latérale de la couche de couverture par rapport à la sonotrode.

9. Le procédé selon l'une des revendications précédentes, dans laquelle la sonotrode est recouverte d'un matériau non métallique.

10. Le procédé selon l'une quelconque des revendications précédentes, comprenant la mise en place d'une couche de protection séparée entre la sonotrode et la couche de couverture au cours de l'étape d'application de la vibration mécanique.

11. Le procédé selon l'une quelconque des revendications précédentes, dans lequel le matériau d'assemblage est un matériau thermoplastique, et dans lequel l'activation du matériau d'assemblage consiste à rendre le matériau d'assemblage fluide.

12. Le procédé selon l'une des revendications 1 à 10, dans laquelle le matériau d'assemblage est un adhésif durcissable, et dans laquelle l'activation comprend le lancement et/ou l'accélération du processus de durcissement.

13. Le procédé selon l'une quelconque des revendications précédentes, dans laquelle l'objet est solide et rigide, et dans laquelle l'utilisation de la sonotrode (6) pour presser la couche de couverture (2) contre l'objet (1) et pour appliquer une vibration mécanique provoque l'interpénétration d'au moins des parties du matériau d'assemblage à l'état fluide dans les structures de l'objet solide, de sorte qu'après la solidification du matériau d'assemblage, il en résulte une connexion positive entre la couche de couverture (2) et l'objet (1).

14. Le procédé selon l'une quelconque des revendications précédentes, dans lequel la largeur active (a), qui est une extension, le long de la direction de transport, d'une région dans laquelle la face d'accouplement est pressée contre la surface de l'objet, correspond à au moins 5 fois la longueur d'une trajectoire p par laquelle la sonotrode déplace la couche de couverture par rapport à l'objet dans une direction perpendiculaire à la surface de l'objet.

15. Installation pour la mise en oeuvre du procédé tel que défini dans l'une quelconque des revendications précédentes, l'installation comprenant :
une zone d'alimentation (F) équipée pour disposer la couche de couverture (2) et l'objet (1) avec la surface de contact de la couche de couverture (2) et la surface de contact de l'objet (1) face à face, et pour amener la surface de contact de la couche de couverture (2) en contact avec la surface de contact de l'objet (1),
une zone de liquéfaction (L) équipée d'un dispositif de vibration comprenant au moins une sonotrode (6) conçue pour appliquer une vibration mécanique et une force de pression sur une surface extérieure de la couche de couverture (2),
un transporteur d'objets pour transporter l'objet (1) de manière continue dans une direction de transport (CD) à travers la zone d'alimentation (F) et la zone de liquéfaction (L),
et un transporteur de couche de couverture pour alimenter la couche de couverture (2) dans et à travers la zone d'alimentation (F).
**caractérisé par le fait que** la sonotrode possède une face d'accouplement (61) dont la partie de la face d'accouplement n'est pas parallèle à la surface de contact de l'objet mais forme un angle (α) avec celle-ci, de sorte que la distance entre la sonotrode et la surface de contact de l'objet diminue continuellement le long de la partie de la face d'accouplement en fonction d'une position le long de la direction de transport.
